# EUROPEAN PATENT SPECIFICATION

(11) **EP 3 201 532 B1**
(45) Date of publication and mention of the grant of the patent: **09.01.2019**
(21) Application number: 15781715.6
(22) Date of filing: 14.09.2015
(51) Int. Cl.: F24D 3/18, F01K 1/00, F02G 5/04, F24D 19/10, F01K 1/20

(54) **METHOD AND APPARATUS FOR COGENERATION POWER PLANT WASTE HEAT SOURCE UTILIZATION BY INCORPORATED WATER SOURCE HIGH TEMPERATURE HEAT PUMP**
VERFAHREN UND VORRICHTUNG ZUR HEIZKRAFTWERKABWÄRMEQUELLENNUTZUNG DURCH INTEGRIERTE WASSERQUELLENHOCHTEMPERATURWÄRMEPUMPE
PROCÉDÉ ET APPAREIL POUR L'UTILISATION D'UNE SOURCE DE CHALEUR RÉSIDUELLE D'UNE CENTRALE ÉLECTRIQUE DE COGÉNÉRATION PAR UNE POMPE À CHALEUR À HAUTE TEMPÉRATURE À SOURCE D'EAU INCORPORÉE

(30) Priority: 03.10.2014 SI 201400339
(43) Date of publication of application: 09.08.2017
(73) Proprietor: University of Maribor, 2000 Maribor (SI)
(72) Inventor: GORICANEC, Darko, SI-2000 Maribor (SI); KROPE, Jurij, SI-2312 Orehova vas (SI); BOZICNIK, Stane, SI-2000 Maribor (SI)
(74) Representative: Lösch, Christoph Ludwig Klaus
(86) International application number: PCT/IB2015/001617
(87) International publication number: WO 2016/051246

(56) References cited:
- EP-A1- 2 722 595
- EP-A2- 1 273 785
- EP-A2- 2 299 098
- DE-A1- 3 912 113
- DE-A1-102012 106 894
- DE-U1-202012 101 816
- US-A1- 2006 037 349

## Description

### Field of invention

The object of this patent application relates to the methods and apparatus for combined heat and power systems waste heat recovery (i.e. cogeneration power plants) wherein incorporated water source high temperature heat pump utilizes at least one waste heat source of cogeneration unit.

### Background of the Invention

Heat pumps that have been used in prior art to enhance the heating power of combined heat and power systems by utilizing the waste heat recovery have been deployed in a number of designs. According to US2006037349 a waste heat is used to improve the heating performance of a heat pump type air conditioner or to prevent an outdoor heat exchanger of the heat pump type air conditioner from being frosted. Yet another solution as disclosed in EP 2299098 A2, which discloses the preamble portion of the independent claims 1 and 8, incorporates an air source type heat pump for utilizing the waste heat source of cogeneration unit, wherein similarly to the one stated before, the main disadvantage of represented approach is relatively low thermal coefficient of performance compared to the water source heat pump potential.

### Summary of the Invention

This invention relates to the combined heat and power systems, wherein at least one incorporated water source high temperature heat pump is used to upgrade a low temperature heat from at least one waste heat source to the higher temperature heat output, which can be afterwards used by at least one heat consumer for space or process heating, preferably in the scope of district heating. It is important to notice, that the heat pump according to the invention is used to heat up and rise the temperature of a heat transfer medium in a return line of a heat distribution network, wherein a design (i.e. operational) temperature of the heat transfer medium in a forward line of the heat distribution network is substantially higher than 60°C, when operating at normal operating conditions. It can be understood, that operating conditions of the heat distribution network are provided after commissioning and warm-up process where at least basic design temperature of the heat distribution network is successfully achieved and maintained (i.e. established) over at least a short period of time, hence at least one internal combustion engine is turned on and operating by firing the fuel in the combustion process in continuous operation and at least one heat pump is turned on and operating for liquid-vapor phase change thermodynamic cycle process (i.e. heat pump principle) and waste heat source utilization. In accordance, at least one internal combustion engine and at least one heat pump are used to provide a first and second heat source respectively in the scope of heat distribution network where individual unit shall substantially operate in the range between its minimum and maximum rated (i.e. full load) operating power, preferably at normal rated power for highest power developed in continuous operation.

Exemplary embodiment of the present invention will now be described with reference to the accompanying drawing, i.e. schematics of a cogeneration power plant with incorporated water source high temperature heat pump in a heat distribution network (i.e. preferably at least one closed loop circuit heating system).

### Brief description of the drawing

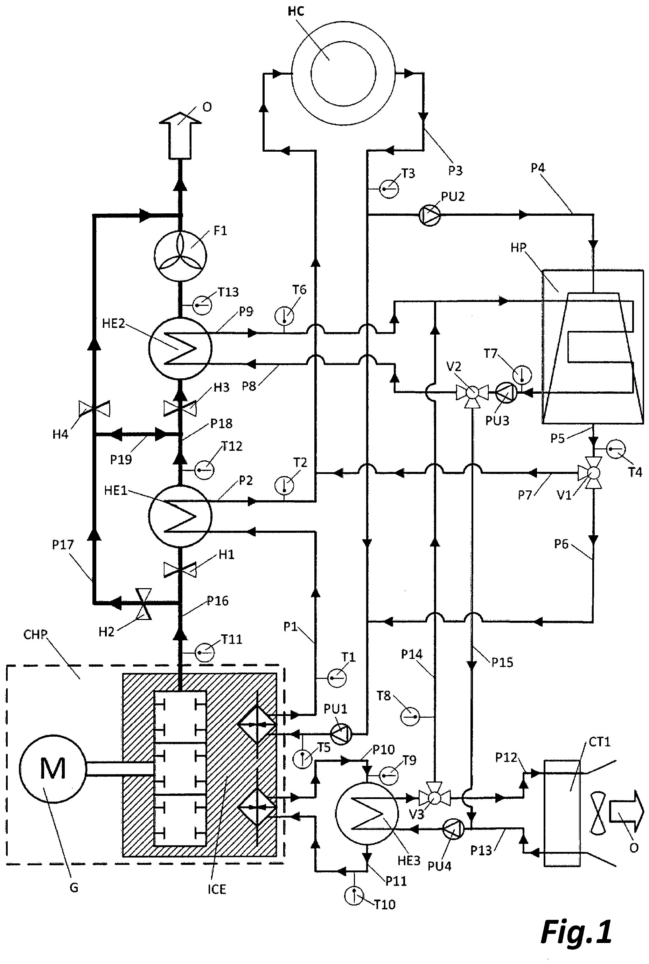

**Figure 1** shows a schematic representation of combined heat and power plant preferential embodiment with incorporated water source high temperature heat pump (HP) having a condenser and evaporator unit for heat pump principle utilization, where following items are shown and marked: cogeneration unit (CHP) with prime mover, preferably internal combustion engine (ICE) with adapted electrical generator (G), heat distribution circuit comprising a network of pipes (P1 - P19), valves (V1 - V3) and pumps (PU1 - PU4) which interconnects the heat consumer (HC) with heat sources, heat exchangers (HE1 - HE3), hatches (H1 - H4), fan (F1), external cooling system (CT1), ambient (O) and control temperature sensors (T1-T13).

Referring to the preferential embodiment of the cogeneration unit (CHP) with incorporated water source high temperature heat pump (HP), the system comprises an internal combustion engine (ICE), preferably a water cooled gas engine, which runs on a gas fuel, such as natural gas, liquefied petroleum gas, landfill gas, wood gas or biogas for example. While internal combustion engine (ICE) and generator (G) are used for electricity and heat generation when powered, a significant amount of heat is released from the cylinders within the combustion process and other subcomponents (i.e. lubrication oil, charging air and exhaust gas, hereinafter addressed as flue gas), wherein the heat is either used by heat consumer (HC) rather than dissipated to the ambient (O) through the external cooling system (CT1). It is important to notice, that the main heat source for heat consumer (HC) is preferably represented by internal combustion engine (ICE) cooling system (i.e. a jacket type heat exchanger, having an inlet and outlet aperture, herein addressed as inflow and outflow aperture) whereby plurality of waste heat sources arise in the scope of the cogeneration unit (CHP) and incorporated heat pump (HP) when the internal combustion engine (ICE) and heat pump (HP) are turned on and powered, preferably at optimum efficiency or full load regime.

Effective recovery of waste heat is critical to provide a good total utilization of fuel energy, thus, first and most important waste heat source is represented by flue gas in exhaust system, which is a product of the combustion process within the internal combustion engine (ICE). Secondly, there are at least two additional waste heat sources represented by lubrication oil cooling systems, the first one represented by internal combustion engine (ICE) lubrication oil cooling system and a second one represented by the heat pump (HP) lubrication oil cooling system (i.e. incorporated compressors lubrication oil cooling system). Furthermore, there are few minor waste heat sources, as internal combustion engine (ICE) charging air cooling system for example, which are under certain circumstances still important for good total waste heat source utilization.

According to the depicted preferential embodiment as represented on figure 1, the internal combustion engine (ICE) cooling system inflow and outflow apertures are operably coupled to the heat distribution circuit comprising a network of pipes (P1 - P19) that operably interconnects the heat consumer (HC) with heat sources in the scope of cogeneration plant with incorporated water source high temperature heat pump (HP). The heat distribution circuit further comprises a primary heat transfer medium and automated regulation means comprising the control unit (i.e. control electronics), valves (V1 - V3) and pumps (PU1 - PU4) for primary heat transfer medium flow regulation, wherein the heat of heat sources is preferably transferred to the heat consumer (HC) by principle of primary heat transfer medium circulation in a closed loop heat distribution circuit.

As partially known from prior art, the waste heat of flue gas is utilized by incorporated heat exchanger (HE1) which collects the high temperature waste heat of flue gas in exhaust system, wherein the exhaust heat exchanger (HE1) is capable to collect the waste heat due to the significant temperature difference between the flue gas in exhaust system and primary heat transfer medium in incorporated heat exchanger (HE1). Furthermore, exhaust system according to the invention preferably comprises at least one additional condensing heat exchanger (HE2), which is incorporated to collect at least the residual low temperature waste heat of flue gas, being used afterwards by water source high temperature heat pump (HP) to enhance the heating power of the cogeneration unit (CHP). More precisely, the depicted embodiment comprises two heat exchangers (HE1, HE2) incorporated into the internal combustion engine (ICE) exhaust system with aim to collect the waste heat of combustion process, wherein it is important to notice, that the first heat exchanger (HE1) is operably coupled to the forward line of heat distribution circuit, wherein the flow of primary heat transfer medium through the heat exchanger (HE1) cools down the temperature of flue gas to approximately 120°C; and furthermore, the second (i.e. preferably condensing) heat exchanger (HE2) is operably coupled with a high temperature heat pump (HP) evaporator unit, preferably in a closed loop piping system with secondary heat transfer medium involved, hence the temperature of the flue gas in exhaust system is additionally reduced to the temperature close to the ambient (O), preferably bellow 25°C. While the temperature of flue gas in exhaust system is rapidly reduced, the exhaust system may further comprise a suction fan (F1) for removal of flue gas from exhaust system, if necessary.

If appropriate, the heating power of represented cogeneration unit (CHP) can be furthermore enhanced if the first heat exchanger (HE1) is partially or completely bypassed by means of flue gas stream manipulation (i.e. regulation) means comprising motorized valves, preferably hatches (H1-H4), regulated by said control unit. Even more, if appropriate, the heat exchanger (HE2) and heat pump (HP) shall be implemented in a multistage approach or cascade principle comprising a plurality of heat pumps (HP) and/or heat exchangers (HE2) in parallel and/or serial connection, to reach the simplified and cost effective solution for exhaust system as well. As follows, similarly as described for flue gas waste heat utilization, the waste heat of internal combustion engine charging air or lubrication oil cooling system can be collected as well by at least one additional heat exchanger (HE3), which is operably coupled to the heat pump (HP) evaporator unit in serial or parallel connection with above described heat exchanger (HE2) in exhaust system, wherein the lubrication oil cooling system of heat pump (HP) compressor is preferably incorporated into the water source high temperature heat pump (HP) enclosure.

While there are several options for waste heat source utilization it is essential to notice, that preferential embodiment of water source high temperature heat pump (HP) utilization uses at least one low temperature waste heat source for vaporization of working medium of incorporated heat pump (HP), wherein the condenser unit outlet is preferably fed to the heat distribution circuit return line, more precisely to the inflow of the internal combustion engine (ICE) cooling system, where the aim of proposed inventive approach is to reach and maintain the maximum allowed temperature of the primary heat transfer medium at the inlet of the engine cooling system. According to depicted embodiment on figure 1 the heat distribution circuit comprises a cooling system bypass connection, hence the cooling system is at least partially bypassed when the maximum allowed temperature of primary heat transfer medium at inflow aperture of the internal combustion engine (ICE) cooling system is reached and successfully maintained at defined set point with hysteresis, wherein the valve (V1) is reconfigured by automated regulation means to a position, which at least partially redirects the primary heat transfer medium stream from condenser unit outlet to the forward line of heat distribution circuit. In addition, the heat distribution circuit further comprises a heat pump (HP) condenser unit bypass connection, wherein the condenser unit is at least partially bypassed according to the heat demand situation in heat distribution circuit.

Furthermore, the invention relates to a method of the heat pump (HP) integration process, to a method for utilization of low grade temperature waste heat sources of cogeneration unit (CHP) by water source high temperature heat pump (HP) and to a method of using the apparatus according to the invention.

The following steps represent the key features of a heat pump (HP) integration and novel method for cogeneration unit (CHP) waste heat source utilization:
1. Integration of the water source high temperature heat pump (HP) having a condenser and evaporator unit with working medium for liquid-vapor phase change thermodynamic cycle utilization and at least one heat exchanger (HE2, HE3), wherein:
   A) the high temperature heat pump (HP) condenser unit is operably coupled to the heat distribution circuit pipeline system; and
   B) the high temperature heat pump (HP) evaporator unit is operably coupled with at least one heat exchanger (HE2, HE3) in a closed loop piping system with secondary heat transfer medium involved.
2. Collecting the heat by incorporated heat exchanger (HE2, HE3) from at least one waste heat source, wherein the heat source is:
   A) Flue gas stream in exhaust system; and/or
   B) Lubrication oil cooling system; and/or
   C) Intercooler charging air.
3. Transfer of the heat from at least one heat source to the high temperature heat pump (HP) evaporator unit, preferably by circulation of secondary heat transfer medium in the closed loop piping system.
4. Transfer of the heat from secondary heat transfer medium to the working medium in evaporator unit of the high temperature heat pump (HP), wherein the low temperature heat from at least one waste heat source is upgraded by working medium liquid-vapor phase change thermodynamic cycle, hence the temperature of the working medium in condenser unit is substantially higher than the temperature of the working medium in evaporator unit.
5. Transfer of the heat from working medium in the high temperature heat pump (HP) to the primary heat transfer medium in the heat distribution circuit, wherein the temperature of the primary heat transfer medium at condenser unit outlet is substantially higher than temperature of the primary heat transfer medium at condenser unit inlet, hence the high temperature output of condenser unit is fed to the:
   A) Internal combustion engine (ICE) cooling system inflow (i.e. return line), wherein the inflow temperature is maintained by automated regulation means (preferably by valves (V1 - V3) and pumps (PU1 - PU4)) in a range between the 60°C and 90°C, preferably at set point with 70°C; and/or
   B) Forward line of the heat distribution circuit with at least one heat consumer (HC) involved.
6. Usage of high temperature primary heat transfer medium by:
   A) Internal combustion engine (ICE) cooling system with aim to maintain the maximum allowed predefined set point of inlet temperature; and/or
   B) Heat consumer (HC) in the scope of the district heating, industrial or technological process.

The following steps represent the key features of a method of using the apparatus according to the invention:
1. A fuel combustion process, where an engine cooling system of at least one internal combustion engine (ICE) is used to provide a first heat releasing unit for heating at least one heat transfer medium in said heat distribution network, wherein at least one waste heat source arise when the internal combustion engine (ICE) is turned on and operating by firing the fuel in the combustion process. Accordingly, plurality of internal combustion engine (ICE) units with engine cooling systems in parallel or serial connection shall be used to provide an advanced edition of the first heat releasing unit.
2. A waste heat recovery process comprises a process of collecting the waste heat, wherein at least one waste heat recovery unit is used to collect at least a portion of the heat of at least one waste heat source from group of waste heat sources comprising a flue gas in exhaust system, charging air in charging air cooling system or lubrication oil in lubrication oil cooling system. Accordingly, plurality of waste heat recovery units in parallel or serial connection shall be used to provide an advanced apparatus for waste heat recovery process utilization.
3. A liquid-vapor phase change thermodynamic cycle utilization process, wherein at least one water source high temperature heat pump (HP) shall be used to provide a second heat releasing unit for heating at least one heat transfer medium in said heat distribution network, at least when said heat pump (HP) is turned on and operating. Accordingly, plurality of heat pumps (HP) units in parallel or serial connection is used to provide an advanced edition of the second heat releasing unit.
4. Usage of collected heat for liquid-vapor phase change utilization, wherein at least a portion of collected heat is used for the liquid-vapor phase change cycle utilization and wherein at least a portion of the heat generated by at least one heat pump (HP) in the scope of the second heat releasing unit is used for heating the engine cooling system of at least one internal combustion engine (ICE) in the scope of the first heat releasing unit.
5. Distribution of the heat in at least one closed loop circuit of said heat distribution network by circulation of at least one heat transfer medium, wherein the lowest temperature of the heat distribution medium in the engine cooling system of at least one internal combustion engine (ICE) in the scope of the first heat releasing unit is substantially higher than the lowest temperature of the heat distribution medium in at least one heat consumer (HC). Hence, at least one heat transfer medium in at least one return line of said heat distribution network is reheated by the heat pump (HP) principle utilization, wherein the temperature of the heat transfer medium in said engine cooling system of at least one internal combustion engine (ICE) is substantially higher than 60°C, at least when a design temperature of the heat distribution network is reached and said internal combustion engine (ICE) and heat pump (HP) are operating at full load.

In addition to represented method of using the apparatus according to the invention, few explanations and definitions are required, wherein combustion process is substantially a continuous process, while said internal combustion engine (ICE) normally operates in the range between its minimum and maximum rated operating power, preferably at normal rated power in continuous operation. Similarly the liquid-vapor phase change thermodynamic cycle utilization process is substantially a continuous process, wherein said heat pump (HP) operates in the range between its minimum and maximum rated operating power, preferably at normal rated power in continuous operation. If appropriate, the fuel combustion process in complex (i.e. advanced) heat and power generation plant shall be provided by plurality of internal combustion engine (ICE) units, wherein the heat in the scope of the first heat releasing unit is transferred in serial and/or in parallel connection with aim to transfer the heat between individual engine cooling systems and similarly, the liquid-vapor phase change thermodynamic cycle utilization process shall be utilized by plurality of heat pump (HP) units to provide a second heat releasing unit of the advanced heat and power generation plant.

While one of the key features of method and apparatus according to the invention is establishment of predetermined set point value for internal combustion engine coolant temperature, the thermal energy balance adjustment is executed by adapting the power of said heat pump (HP) and/or by adapting the power of said internal combustion engine (ICE) and/or by adapting the mass flow of the primary heat transfer medium through the engine cooling system of said internal combustion engine and/or by adapting the mass flow of the primary heat transfer medium through the heat pump (HP) and/or by adapting the mass flow of the secondary heat transfer medium in at least one of said closed loop circuit for waste heat source utilization. Accordingly the mass flow of the primary heat transfer medium in said heat distribution circuit is adapted by changing the flow velocity in said heat distribution circuit and/or the mass flow of the secondary heat transfer medium in said closed loop circuit is adapted by changing the flow velocity in said closed loop circuit, wherein the velocity of heat transfer medium in heat distribution network is adapted by switching (i.e. on/off regulation) and/or by adjusting the power of at least one circulation pump for mass flow adjustment. In addition, the mass flow of the primary heat transfer medium in said heat distribution circuit is alternatively adapted by stream flow regulation, wherein at least a portion of the primary heat transfer medium stream in the return line of said heat distribution circuit is redirected to the return line of said heat distribution circuit to provide a heat pump (HP) bypass connection, and/or wherein at least a portion of the primary heat transfer medium stream from said heat pump (HP) is redirected to a forward line of the heat distribution circuit to provide an engine cooling system bypass connection. Similarly the mass flow of the secondary heat transfer medium in said closed loop circuit for waste heat source utilization is adapted by stream flow regulation, wherein at least a portion of the secondary heat transfer medium stream is redirected in said closed loop circuit to provide a bypass connection for at least one waste heat recovery unit. Accordingly, the mass flow regulation of the primary heat transfer medium and/or the mass flow regulation of the secondary heat transfer medium for thermal energy balance adjustment is determined, controlled and executed by at least one control unit (i.e. electronic controller), wherein the position and/or the state (i.e. open/closed or on/off regulation) of the automated regulation means is adjusted in respect to the heat demand in said heat distribution network.

The apparatus according to the invention may further comprise at least one control unit, wherein such a controller shall be autonomous device for thermal management regulation or alternatively, at least basic functions of the thermal management controller for determination process, comparison process and execution process could be incorporated and implemented to the internal combustion engine (ICE) controller or in to the heat pump (HP) controller as well. In the determination process the environment and thermal conditions of heat distribution network is determined by the group of thermal, pressure or other sensors, wherein at least one input from at least one sensor of heat distribution network or internal combustion engine (ICE) is used for comparison process, where at least one value of at least one input parameter (i.e. preferably a temperature of the primary heat transfer medium in engine cooling system) is analyzed and compared to the limiting values, preferably being pre-defined and stored in the control unit. Accordingly the execution process comprises a process of executing instructions stored in control unit to generate appropriate output signal, where at least one parameter for thermal energy balance adjustment is generated, executed and performed by control electronics in cooperation with automated regulation means in order to reach and maintain the threshold set-point value, wherein said threshold value is defined between the maximum value and the minimum value for set point equal value with aim to provide a hysteresis for thermal energy balance adjustment.

It can be understood that control unit (i.e. electronic module) may communicate with various output devices where the temperature of the heat transfer medium in the heat transfer network is determined, controlled and regulated by a group of automated regulation means comprising motorized valves, pumps and sensors, wherein regulation means are preferably adapted to be manipulated by at least one control unit. And furthermore, the heat distribution process in heat distribution network is provided by at least one heat transfer medium, preferably by plurality of heat distribution mediums. Accordingly the heat in said heat transfer network is transferred from first heat releasing unit to the heat consumer (HC) by circulation of the primary heat transfer medium in at least one closed loop circuit, and similarly the heat from waste heat recovery unit is transferred to the heat pump (HP) by circulation of the secondary heat transfer medium in at least one closed loop circuit, wherein the heat upgraded by at least one heat pump (HP) is furthermore transferred from heat pump (HP) condenser unit to the engine cooling system of at least one internal combustion engine (ICE) by said primary heat transfer medium.

Summarizing, the cooling circuits of cogeneration unit (CHP), herein represented as low temperature waste heat sources, are used for utilization of water source high temperature heat pump (HP), wherein its hot water output is preferably used for establishing and maintaining the highest possible or maximum allowed temperature of primary heat transfer medium for internal combustion engine (ICE) cooling system inflow (i.e. cooling jacket inlet). It can be understood, that all vital components of heat distribution circuit are preferably operably coupled for heat transfer medium circulation, wherein the compressor of the incorporated heat pump (HP) shall be driven by electric machine, powered by electricity from grid or generator (G), or alternatively if appropriate, a high temperature heat pumps (HP) compressor shall be mechanically coupled to and driven by internal combustion engine (ICE) as well. Furthermore, as can be clearly read out from previous description, the primary heat transfer medium in preferential embodiment is water and similarly, the secondary heat transfer medium in preferential embodiment is mix of water and glycol.

## Claims

1. A method of using a heat and power generation apparatus for heating at least one heat consumer (HC) in a heat distribution network by adopting the principle of a water source high temperature heat pump (HP) for waste heat source utilization, the method comprising:
a fuel combustion process, wherein an engine cooling system of at least one internal combustion engine (ICE) is used to provide a first heat releasing unit for heating at least one heat transfer medium in said heat distribution network and wherein at least one waste heat source arise when the internal combustion engine (ICE) is turned on and operating by firing the fuel in the combustion process;
a waste heat recovery process, wherein at least one waste heat recovery unit is used to collect at least a portion of the heat of at least one waste heat source from group of waste heat sources comprising a flue gas in exhaust system, charging air in charging air cooling system or lubrication oil in lubrication oil cooling system;
a liquid-vapor phase change thermodynamic cycle utilization process, wherein at least one water source high temperature heat pump (HP) is used to provide a second heat releasing unit for heating at least one heat transfer medium in said heat distribution network when said heat pump (HP) is turned on and operating,
the heat required for the liquid-vapor phase change cycle utilization is gained fully or in part by said waste heat recovery process, wherein at least a portion of the heat collected in the waste heat recovery process is used for liquid-vapor phase change thermodynamic cycle process utilization, and wherein at least a portion of the heat generated by at least one heat pump (HP) in the second heat releasing unit is used for heating the engine cooling system of at least one internal combustion engine (ICE) in the first heat releasing unit;
the heat in at least one closed loop circuit of said heat distribution network is preferably distributed by circulation of at least one heat transfer medium, wherein the lowest temperature of the heat distribution medium in the engine cooling system of at least one internal combustion engine (ICE) in the first heat releasing unit is substantially higher than the lowest temperature of the heat distribution medium in at least one heat consumer (HC) in the the heat distribution network, **characterized in that**
at least one heat transfer medium in at least one return line of said heat distribution network is reheated by the heat pump (HP) principle utilization, and wherein the temperature of the heat transfer medium in said engine cooling system of at least one internal combustion engine (ICE) is substantially higher than 60°C, at least when a design temperature of the heat distribution network is reached and said internal combustion engine (ICE) and heat pump (HP) are operating at full load.

2. A method as in claim 1 **characterized in that**
the fuel combustion process is substantially a continuous process, wherein said internal combustion engine (ICE) operates in the range between its minimum and maximum rated operating power, preferably at normal rated power in continuous operation;
the liquid-vapor phase change thermodynamic cycle utilization process is substantially a continuous process, wherein said heat pump (HP) operates in the range between its minimum and maximum rated operating power, preferably at normal rated power in continuous operation;
the waste heat recovery process comprises a process of flue gas condensation, wherein the collected heat is used for heat pump (HP) principle utilization and wherein the temperature of the flue gas is reduced below 25°C, hence the flue gas in exhaust system is removed by ventilating the exhaust system by incorporated fan (F1);
the waste heat recovery process is used for cooling principle utilization, wherein the heat recovery process is used for cooling the charging air for the fuel combustion process utilization;
the temperature of the heat transfer medium in the heat transfer network is determined, controlled and regulated by a group of automated regulation means comprising valves (V1 - V3), pumps (PU1 - PU4) and sensors (T1 - T13), wherein said regulation means are preferably adapted to be manipulated by at least one control unit.

3. A method as in claim 2 **characterized in that**
the fuel combustion process is provided by plurality of internal combustion engine (ICE) units, wherein the heat in the first heat releasing unit is transferred in serial and/or in parallel connection to transfer the heat between engine cooling systems in order to provide a first heat releasing unit;
the liquid-vapor phase change thermodynamic cycle utilization process is provided by plurality of heat pump (HP) units, wherein the heat in the second heat releasing unit is transferred in serial and/or parallel connection to transfer the heat between heat pump (HP) units in order to provide the second heat releasing unit;
the heat distribution process in heat distribution network is provided by plurality of heat distribution mediums, wherein the heat in said heat transfer network is transferred from first heat releasing unit to the heat consumer (HC) by circulation of primary heat transfer medium in at least one closed loop circuit, wherein the heat from waste heat recovery unit is transferred to the heat pump (HP) by circulation of the secondary heat transfer medium in at least one closed loop circuit, and wherein the heat upgraded by at least one heat pump (HP) is furthermore transferred to the engine cooling system of at least one internal combustion engine (ICE) by said primary heat transfer medium.

4. A method as in claim 3 **characterized in that**
the temperature of the primary heat transfer medium in the engine cooling system of said internal combustion engine (ICE) is maintained at predetermined set point value, wherein thermal energy balance adjustment is executed by adapting the power of said heat pump (HP) and/or by adapting the power of said internal combustion engine (ICE) and/or by adapting the mass flow of the primary heat transfer medium through the engine cooling system of said internal combustion engine and/or by adapting the mass flow of the primary heat transfer medium through the heat pump (HP) and/or by adapting the mass flow of the secondary heat transfer medium in said closed loop circuit for waste heat source utilization.

5. A method as in claim 4 **characterized in that**
the mass flow of the primary heat transfer medium in said heat distribution circuit is adapted by changing the flow velocity in said heat distribution circuit and/or the mass flow of the secondary heat transfer medium in said closed loop circuit is adapted by changing the flow velocity in said closed loop circuit, wherein the velocity of heat transfer medium in heat distribution network is adapted by switching and/or by adjusting the power of at least one circulation pump.

6. A method as in claim 4 **characterized in that**
the mass flow of the primary heat transfer medium in said heat distribution circuit is adapted by stream flow regulation, wherein at least a portion of the primary heat transfer medium stream in the return line of said heat distribution circuit is redirected to the return line of said heat distribution circuit to provide a heat pump (HP) bypass connection, and/or wherein at least a portion of the primary heat transfer medium stream from said heat pump (HP) is redirected to a forward line of the heat distribution circuit to provide an engine cooling system bypass connection;
the mass flow of the secondary heat transfer medium in said closed loop circuit for waste heat source utilization is adapted by stream flow regulation, wherein at least a portion of the secondary heat transfer medium stream is redirected in said closed loop circuit to provide a bypass connection for at least one waste heat recovery unit.

7. A method as in claim 5 and 6 **characterized in that**
the mass flow regulation of the primary heat transfer medium and/or the mass flow regulation of the secondary heat transfer medium for thermal energy balance adjustment is determined, controlled and executed by said control unit, wherein the position and/or the state of the automated regulation means is adjusted in respect to the heat demand in said heat distribution network.

8. An apparatus assembly for cogeneration plant waste heat source utilization comprising:
at least one internal combustion engine (ICE) further comprising an engine cooling system, exhaust system, a lubrication oil cooling system and a charging air cooling system, wherein said engine cooling system further comprises at least one inflow aperture and at least one outflow aperture;
at least one water source high temperature heat pump (HP), wherein said heat pump (HP) further comprises a lubrication oil cooling system, an evaporator unit and a condenser unit, and wherein said condenser unit further comprises an inlet aperture and an outlet aperture;
and at least one waste heat recovery unit, preferably a heat exchanger (HE2) adapted to be associated with said evaporator unit in a closed loop circuit;
wherein said waste heat recovery unit is adapted to be associated with at least one from group of waste heat sources comprising an exhaust system, a lubrication oil cooling system and charging air cooling system for collecting the heat of said waste heat source; and
said evaporator unit is adapted to be associated with said waste heat recovery unit in a closed loop circuit for transferring the collected heat from said waste heat recovery unit to said evaporator unit by a secondary heat transfer medium in said closed loop circuit; **characterized in that**
said outlet of the condenser unit is adapted to be associated with said inflow of the engine cooling system for transferring the heat of condenser unit to the engine cooling system by a primary heat transfer medium in a heat distribution circuit; and
the inlet of said condenser unit and said outflow of the engine cooling system are adapted to be associated with said heat distribution circuit, wherein said heat distribution circuit further comprises at least one thermal energy receiving unit, preferably a heat consumer (HC).

9. The apparatus assembly for cogeneration plant waste heat source utilization as in claim 8 **characterized in that**
said heat distribution circuit comprises at least one forward line and at least one return line, wherein said forward line and return line interconnects the outflow of said engine cooling system and inlet of said condenser unit via at least one heat consumer (HC), wherein said primary heat transfer medium circulate in said heat distribution circuit to transfer the heat of heat source to the heat consumer (HC);
said outflow of the engine cooling system is operably coupled to the forward line of the heat distribution circuit;
said inlet of the condenser unit is operably coupled to at least one return line of heat distribution circuit;
said outlet of the condenser unit is operably coupled to the inflow of said engine cooling system wherein said heat distribution circuit comprises a primary heat transfer medium; and
said heat exchanger (HE2) is incorporated to said exhaust system to receive at least a portion of the heat of flue gas, wherein said heat exchanger (HE2) is operably coupled to said evaporator unit in the closed loop circuit comprising a secondary heat transfer medium, wherein the heat collected in heat exchanger (HE2) is transferred to the evaporator unit by secondary heat transfer medium circulation in said closed loop circuit, and furthermore, the heat of said condenser unit is transferred to the engine cooling system by primary heat transfer medium circulation in said head distribution circuit, wherein the temperature of said primary heat transfer medium at inflow of said engine cooling system is substantially higher than 60°C when the internal combustion engine (ICE) and heat pump (HP) are turned on and powered at operating conditions.

10. The apparatus assembly for cogeneration plant waste heat source utilization as in claim 8 **characterized in that**
said closed loop further comprises an additional heat exchanger (HE3), wherein said additional heat exchanger (HE3) is adapted to be associated with an external cooling system (CT1), wherein said external cooling system (CT1) is adapted to be associated with a lubrication oil cooling system of internal combustion engine (ICE), lubrication oil cooling system of heat pump (HP) and/or internal combustion engine (ICE) charging air cooling system.

11. The apparatus assembly for cogeneration plant waste heat source utilization as in claim 9 and 10 **characterized in that**
said heat distribution circuit comprises a plurality of the heat consumers (HC) in parallel connection and/or in serial connection;
said heat distribution circuit comprises a plurality of the heat pumps (HP) in parallel connection and/or in serial connection, wherein closed loop circuit of said evaporator unit comprises a plurality of heat exchangers (HE2, HE3) in parallel connection and/or in serial connection, and wherein at least one of the condenser unit outlet aperture is operably coupled to the inflow of said internal combustion engine (ICE) cooling system.

12. The apparatus assembly for cogeneration plant waste heat source utilization as in claim 11 **characterized in that**
said internal combustion engine (ICE) is designed as a gas fueled engine which runs on a gas fuel selected from group comprising a natural gas, liquefied petroleum gas, landfill gas, wood gas or biogas, wherein said engine cooling system is designed as an engine jacket cooling system of said internal combustion engine (ICE); the primary heat transfer medium in preferential embodiment is water; the secondary heat transfer medium in preferential embodiment is mix of water and glycol; and at least one of said heat exchanger (HE2) is designed as a condensing heat exchanger (HE2), wherein exhaust system further comprises at least one fan (F1) for flue gas extraction.

## Patentansprüche

1. Verfahren zur Verwendung einer Wärme- und Stromerzeugungsvorrichtung zum Erwärmen mindestens eines Wärmeverbrauchers (HC) in einem Wärmeverteilungsnetz durch Anwenden eines Prinzips einer Hochtemperaturwärmepumpen (HP) Quellquelle für die Verwendung einer Abwärmequelle, das Verfahren bestehend aus:
einen Brennstoffverbrennungsprozess, bei dem ein Motorkühlsystem mindestens eines Verbrennungsmotors (ICE) verwendet wird, um eine erste Wärmeabgabeeinheit zum Erwärmen mindestens eines Wärmeübertragungsmediums in dem Wärmeverteilungsnetz bereitzustellen, und wobei mindestens eine Abwärmequelle vorhanden ist entstehen, wenn der Verbrennungsmotor (ICE) eingeschaltet wird und läuft, indem der Kraftstoff im Verbrennungsprozess gezündet wird;
ein Abwärmerückgewinnungsverfahren, bei dem mindestens eine Abwärmerückgewinnungseinheit verwendet wird, um mindestens einen Teil der Wärme mindestens einer Abwärmequelle aus einer Gruppe von Abwärmequellen zu sammeln, die ein Dimgas in dem Abgassystem umfassen, wobei Luft beim Laden geladen wird Luftkühlsystem oder Schmieröl in einem Schmierölkühlsystem;
und einen thermodynamischen Zyklus mit Phasenveränderung in Form eines Flüssigdampfphasenwechsels, wobei mindestens eine Hochtemperaturwärmepumpe (HP) mit Wasserquelle verwendet wird, um eine zweite Wärmefreisetzungseinheit zum Erwärmen mindestens eines Wärmeübertragungsmediums in dem Wärmeverteilungsnetzwerk bereitzustellen, wenn die Wärmepumpe ist (HP) ist eingeschaltet und in Betrieb
Die für den Flüssigdampfphasenwechselzyklus erforderliche Wärme wird vollständig oder teilweise durch den Abwärmerückgewinnungsprozess erhalten, wobei mindestens ein Teil der im Prozesswiederherstellungsprozess gesammelten Wärme für den thermodynamischen Flüssigdampfphasenzyklus verwendet wird Prozessnutzung, und wobei mindestens ein Teil der von mindestens einer Wärmepumpe (HP) in der zweiten Wärmetauschereinheit erzeugten Wärme zum Heizen eines Kühlsystems des Motors von mindestens einem Motor mit Verbrennungsmotor (ICE) in der ersten Wärme verwendet wird Freigabeeinheit;
die Wärme in dem mindestens einen geschlossenen Kreislauf des Wärmeverteilungsnetzes wird vorzugsweise durch Zirkulation von mindestens einem Wärmeträgermedium verteilt, wobei die niedrigste Temperatur des Wärmeverteilungsmediums in dem Motorkühlsystem mindestens eines Verbrennungsmotors (ICE) liegt) und die erste Wärmefreisetzungseinheit wesentlich höher ist als die niedrigste Temperatur des Wärmeverteilungsmediums in mindestens einem Wärmeverbraucher (HC) im Wärmeverteilungsnetz, **dadurch gekennzeichnet, dass**
mindestens ein Wärmeträgermedium in mindestens einer Rückführleitung des Wärmeverteilungsnetzes wird durch das Prinzip der Wärmepumpe (HP) erneut erhitzt, wobei die Temperatur des Wärmeträgermediums in dem Motorkühlsystem mindestens eines Verbrennungsmotors ist (ICE) ist wesentlich höher als 60°C, zumindest wenn eine Auslegungstemperatur des Wärmeverteilungsnetzes erreicht ist und der Verbrennungsmotor (ICE) und die Wärmepumpe (HP) bei Volllast arbeiten.

2. Verfahren nach Anspruch 1, **dadurch gekennzeichnet**
der Kraftstoffverbrennungsprozess ist ein im Wesentlichen kontinuierlicher Prozess, wobei der Verbrennungsmotor (ICE) im Bereich zwischen seiner minimalen und maximalen Nennbetriebsleistung arbeitet, vorzugsweise bei normaler Nennleistung im Dauerbetrieb;
der thermodynamische Zyklus der Phase-Phase-Änderung der Flüssigphasenänderung ist im Wesentlichen ein kontinuierlicher Prozess, wobei die Wärmepumpe (HP) im Bereich zwischen ihrer minimalen und maximalen Nennbetriebsleistung arbeitet, vorzugsweise bei normaler Nennleistung im Dauerbetrieb;
Der Abwärmerückgewinnungsprozess umfasst einen Prozess der Rauchgaskondensation, wobei die gesammelte Wärme für das Prinzip der Wärmepumpe (HP) verwendet wird und die Temperatur des Dimgases unter 25°C verringert wird, daher ist das Dimgas im Abgassystem durch Belüften des Abgassystems durch einen eingebauten Lüfter (F1) entfernt werden;
der Abwärmerückgewinnungsprozess wird zur Verwendung des Kühlprinzips verwendet, wobei der Wärmerückgewinnungsprozess zum Kühlen der Ladeluft für die Brennstoffverbrennungsprozessverwendung verwendet wird;
Die Temperatur des Wärmeübertragungsmediums in dem Wärmeübertragungsnetzwerk wird durch eine Gruppe automatisierter Regulierungsmittel bestimmt, gesteuert und gesteuert, die ein Ventil (V1 - V3), eine Pumpe (PU1 - PU4) und einen Sensor (T1 - T13) umfassen, wobei die Regelung erfolgt Mittel sind vorzugsweise dazu eingerichtet, von mindestens einer Steuereinheit manipuliert zu werden.

3. Verfahren nach Anspruch 2, **dadurch gekennzeichnet**
Der Kraftstoffverbrennungsprozess wird durch eine Vielzahl von Verbrennungsmotor (ICE) Einheiten bereitgestellt, wobei die Wärme in der ersten Wärmefreisetzungseinheit in einer seriellen und / oder parallelen Verbindung übertragen wird, um Wärme zwischen den Kühlsystemen des Motors zu übertragen, um einen ersten bereitzustellen Wärmefreisetzungseinheit;
Der thermodynamische Kreislauf-Phasenwechsel-Prozess wird durch eine Vielzahl von Wärmepumpeneinheiten (HP) bereitgestellt, wobei die Wärme in der zweiten Wärmefreisetzungseinheit in einer seriellen und / oder parallelen Verbindung übertragen wird, um die Wärme zwischen der Wärmepumpe (HP) zu übertragen. Einheiten, um die zweite Wärmeabgabeeinheit bereitzustellen;
Der Wärmeverteilungsprozess in dem Wärmeverteilungsnetzwerk wird durch eine Vielzahl von Wärmeverteilungsmedien bereitgestellt, wobei die Wärme in dem Wärmeaustauschnetzwerk von der ersten Wärmefreisetzungseinheit zu dem Wärmeverbraucher (HC) durch Zirkulation des primären Wärmeaustauschmediums in mindestens einem übertragen wird einen geschlossenen Kreislauf, bei dem die Wärme von der Abwärmerückgewinnungseinheit durch Zirkulation des sekundären Wärmeübertragungsmediums in mindestens einem geschlossenen Kreislauf zu der Wärmepumpe (HP) übertragen wird, und wobei die Wärme durch mindestens eine Wärmepumpe (HP) aufgewertet wird ferner durch das primäre Wärmeträgermedium auf ein Motorkühlsystem mindestens eines Verbrennungsmotors (ICE) übertragen.

4. Verfahren nach Anspruch 3, **dadurch gekennzeichnet**
die Temperatur des primären Wärmeübertragungsmediums in dem Motorkühlsystem des Verbrennungsmotors (ICE) wird auf einem vorbestimmten Sollwert gehalten, wobei die Anpassung des thermischen Energieausgleichs durch Anpassen der Leistung der Wärmepumpe (HP) und / oder durchgeführt wird durch Anpassen der Leistung des Verbrennungsmotors (ICE) und / oder durch Anpassen des Massenstroms des primären Wärmeträgermediums durch das Motorkühlsystem des Verbrennungsmotors und / oder durch Anpassen des Massenstroms des primären Wärmeträgermediums durch die Wärmepumpe (HP) und / oder durch Anpassen des Massenstroms des sekundären Wärmeübertragungsmediums in dem geschlossenen Kreislauf zur Nutzung der Abwärmequelle.

5. Verfahren nach Anspruch 4, **dadurch gekennzeichnet**
der Massenstrom des primären Wärmeübertragungsmediums in dem Wärmeverteilungskreislauf wird angepasst, indem die Strömungsgeschwindigkeit in dem Wärmeverteilungskreislauf geändert wird und / oder der Massenstrom des sekundären Wärmeübertragungsmediums in dem geschlossenen Kreislaufkreislauf durch Ändern der Strömungsrate angepasst wird in dem geschlossenen Kreislauf, wobei die Geschwindigkeit des Wärmeträgermediums in dem Wärmeverteilungsnetzwerk durch Schalten und / oder durch Einstellen der Leistung von mindestens einer Umwälzpumpe angepasst wird.

6. Verfahren nach Anspruch 4, **dadurch gekennzeichnet**
der Massenstrom des primären Wärmeübertragungsmediums in dem Wärmeverteilungskreislauf wird durch Stromflussregulierung angepasst, wobei mindestens ein Teil des Primärstrom-Mediumübertragungsmediums in der Rückführleitung des Wärmeverteilungskreislaufs zu der Rückführleitung des Wärmeleitungskreislaufs geleitet wird (HP) Bypass-Verbindung, und / oder wobei mindestens ein Teil des primären Wärmeübertragungsmediumstroms von der Wärmepumpe (HP) zur Vorwärtsleitung des Wärmeverteilungskreislaufs umgeleitet wird, um eine Bypass-Anschluss des Motorkühlsystems;
Der Massenstrom des sekundären Wärmetransfermediums in dem geschlossenen Kreislauf zur Abwärmenutzung wird durch Stromflussregulierung angepasst, wobei mindestens ein Teil des sekundären Wärmeträgermediums in dem geschlossenen Kreislauf umgeleitet wird, um eine Bypass-Verbindung bereitzustellen für mindestens eine Abwärmerückgewinnungseinheit.

7. Verfahren nach Anspruch 5 und 6, **dadurch gekennzeichnet**
die Massenstromregelung des primären Wärmeträgermediums und / oder die Massenstromregelung des sekundären Wärmeträgermediums zur Einstellung der thermischen Energiebilanz wird von dieser Steuereinheit bestimmt, gesteuert und ausgeführt, wobei die Position und / oder der Zustand des automatisierten Regulierungsmittel werden in Bezug auf den Wärmebedarf in dem Wärmeverteilungsnetz eingestellt.

8. Vorrichtungsanordnung für eine Wärmeerzeugungsanlage-Abwärmequelle, umfassend:
wobei das Motorkühlsystem ferner mindestens eine Einlassöffnung und mindestens eine Ausströmöffnung umfasst, wobei der mindestens eine Verbrennungsmotor (ICE) ferner ein Motorkühlsystem, ein Abgassystem, ein Schmierölkühlsystem und ein Ladeluftkühlsystem umfasst;
wobei die Wärmepumpe (HP) ferner ein Schmierölkühlsystem, eine Verdampfereinheit und eine Kondensatoreinheit umfasst, und wobei die Kondensatoreinheit ferner eine Einlassöffnung und eine Auslassöffnung umfasst;
und mindestens eine Abwärmerückgewinnungseinheit, vorzugsweise einen Wärmetauscher (HE2), der dazu eingerichtet ist, der Verdampfereinheit in einem geschlossenen Kreislauf zugeordnet zu werden;
wobei die Abwärmerückgewinnungseinheit dazu eingerichtet ist, mit mindestens einer der Gruppe von Abwärmequellen verbunden zu werden, die ein Abgassystem, ein Schmierölkühlsystem und ein Ladeluftkühlsystem zum Sammeln von Wärme der Abwärmequelle umfasst; und
wobei die Verdampfereinheit dazu eingerichtet ist, der Abwärmerückgewinnungseinheit in einem geschlossenen Kreislauf zugeordnet zu werden, um die gesammelte Wärme von der Abwärmerückgewinnungseinheit zu der Verdampfereinheit durch ein sekundäres Wärmeübertragungsmedium in dem geschlossenen Kreislauf zu übertragen; **dadurch gekennzeichnet**
der Auslass der Kondensoreinheit dazu eingerichtet ist, mit dem Einlass des Motorkühlsystems verbunden zu werden, um die Wärme der Kondensoreinheit durch ein primäres Wärmeträgermedium in einem Wärmeverteilungskreislauf an das Motorkühlsystem zu übertragen; und
der Einlass der Kondensoreinheit und der Ausfluss des Motorkühlsystems sind so ausgebildet, dass sie dem Wärmeverteilungskreislauf zugeordnet werden können, wobei der Wärmeverteilungskreis ferner mindestens eine Aufnahmeeinheit für Wärmeenergie umfasst, vorzugsweise einen Wärmeverbraucher (HC).

9. Geräteanordnung für die BHKW-Abwärmenutzung nach Anspruch 8, **dadurch gekennzeichnet, dass**
wobei die Vorlaufleitung und die Rücklaufleitung den Abfluss des Motorkühlsystems und den Einlass der Kondensatoreinheit über mindestens einen Wärmeverbraucher (HC) miteinander verbinden, wobei der Wärmeleitungskreis mindestens eine Vorlaufleitung und mindestens eine Rücklaufleitung umfasst, das primäre Wärmeübertragungsmedium in dem Wärmeverteilungskreislauf zirkuliert, um die Wärme der Wärmequelle an den Wärmeverbraucher (HC) zu übertragen;
der Ausfluss des Motorkühlsystems ist betriebsmäßig mit der Vorwärtsleitung des Wärmeverteilungskreises gekoppelt;
der Einlass der Kondensatoreinheit betriebsmäßig mit mindestens einer Rückführleitung des Wärmeverteilungskreises gekoppelt ist;
der Auslass der Kondensatoreinheit betriebsmäßig mit dem Einlass des Motorkühlsystems gekoppelt ist, wobei der Wärmeverteilungskreis ein primäres Wärmeübertragungsmedium umfasst; und
wobei der Wärmetauscher (HE2) in das Abgassystem eingebaut ist, um mindestens einen Teil der Wärme des Abgases aufzunehmen, wobei der Wärmetauscher (HE2) betriebsmäßig mit der Verdampfereinheit in einem geschlossenen Kreislauf verbunden ist, der ein sekundäres Wärmeübertragungsmedium umfasst, wobei die im Wärmetauscher (HE2) gesammelte Wärme durch die Zirkulation des sekundären Wärmeträgermediums in dem geschlossenen Kreislauf zu der Verdampfereinheit übertragen wird, und ferner die Wärme der Kondensatoreinheit durch ein primäres Wärmeträgermedium an das Motorkühlsystem übertragen wird Zirkulation in dem Kopfverteilungskreislauf, wobei die Temperatur des primären Wärmeübertragungsmediums am Einlass des Motorkühlsystems wesentlich höher als 60°C ist, wenn der Verbrennungsmotor (ICE) und die Wärmepumpe (HP) eingeschaltet und mit Energie versorgt werden Betriebsbedingungen.

10. Geräteanordnung für die BHKW-Abwärmenutzung nach Anspruch 8, **dadurch gekennzeichnet, dass**
der geschlossene Kreislauf ferner einen zusätzlichen Wärmetauscher (HE3) umfasst, wobei der zusätzliche Wärmetauscher (HE3) dazu eingerichtet ist, einem externen Kühlsystem (CT1) zugeordnet zu werden, wobei das externe Kühlsystem (CT1) einem a zugeordnet werden kann Schmierölkühlsystem für Verbrennungsmotor (ICE), Schmierölkühlsystem für Wärmepumpe (HP) und / oder Ladeluftkühlsystem für Verbrennungsmotor (ICE).

11. Geräteanordnung für die Abwärmenutzung von BHKW nach Anspruch 9 und 10, **dadurch gekennzeichnet, dass**
der Wärmeverteilungskreis eine Vielzahl von Wärmeverbrauchern (HC) in Parallelschaltung und / oder in Reihenschaltung aufweist;
der Wärmeverteilungskreislauf eine Vielzahl von Wärmepumpen (HP) in einer Parallelschaltung und / oder in einer Reihenschaltung umfasst, wobei der geschlossene Kreislauf der Verdampfereinheit eine Vielzahl von Wärmetauschern (HE2, HE3) in einer Parallelschaltung und / oder in umfasst serielle Verbindung, und wobei mindestens eine der Auslassöffnungen der Kondensatoreinheit betriebsmäßig mit dem Einlass des Verbrennungsmotorkühlsystems (ICE) gekoppelt ist.

12. Geräteanordnung für die BHKW-Abwärmenutzung nach Anspruch 11, **dadurch gekennzeichnet, dass**
wobei der Verbrennungsmotor (ICE) als ein gasbetriebener Motor ausgebildet ist, der mit einem Gaskraftstoff betrieben wird, der aus einer Gruppe ausgewählt wird, die ein Erdgas, ein Flüssiggas, ein Deponiegas, ein Holzgas oder ein Biogas umfasst, wobei das Motorkühlsystem als Motor ausgebildet ist Mantelkühlsystem des Verbrennungsmotors (ICE); das primäre Wärmeübertragungsmedium in der bevorzugten Ausführungsform ist Wasser; das sekundäre Wärmeträgermedium ist in einer bevorzugten Ausführungsform eine Mischung aus Wasser und Glykol; und mindestens einer der Wärmetauscher (HE2) als Kondensationswärmetauscher (HE2) ausgebildet ist, wobei das Abgassystem ferner mindestens einen Lüfter (F1) zur Gasabsaugung umfasst.

## Revendications

1. Procédé d'utilisation d'un appareil de production de chaleur et d'électricité pour chauffer au moins un consommateur de chaleur (HC) dans un réseau de distribution de chaleur en adoptant le principe de source d'eau source avec pompe à chaleur à haute température (HP) pour l'utilisation de source de chaleur perdue, le procédé comprenant:
un procédé de combustion de carburant, dans lequel un système de refroidissement de moteur d'au moins un moteur à combustion interne (ICE) est utilisé pour fournir une première unité de dégagement de chaleur pour chauffer au moins un moyen de transfert de chaleur dans ledit réseau de distribution de chaleur et dans lequel au moins une source de chaleur perdue se produire lorsque le moteur à combustion interne (ICE) est allumé et en marche en faisant brûler le carburant en cours de combustion;
un procédé de récupération de chaleur perdue, dans lequel au moins une unité de récupération de chaleur perdue est utilisée pour collecter au moins une partie de la chaleur d'au moins une source de chaleur perdue dans un groupe de sources de chaleur perdue comprenant un gaz de faible intensité dans le système d'échappement, l'air de charge étant chargé système de refroidissement par air ou huile de lubrification dans un système de refroidissement par huile de lubrification;
et un procédé d'utilisation de cycle thermodynamique à changement de phase liquide-vapeur, dans lequel au moins une pompe à chaleur à haute température (HP) à source d'eau est utilisée pour fournir une deuxième unité de dégagement de chaleur pour chauffer au moins un moyen de transfert de chaleur dans ledit réseau de distribution de chaleur lorsque ladite pompe à chaleur (HP) est allumé et fonctionne,
la chaleur requise pour l'utilisation du cycle de changement de phase liquide-vapeur est obtenue totalement ou partiellement par ledit processus de récupération de chaleur perdue, au moins une partie de la chaleur collectée lors du processus de récupération de processus étant utilisée pour le cycle thermodynamique en phase liquide-vapeur utilisation du processus, et dans lequel au moins une partie de la chaleur générée par au moins une pompe à chaleur (HP) dans la deuxième unité d'échangeur de chaleur est utilisée pour chauffer un système de refroidissement du moteur d'au moins un moteur à combustion interne (ICE) dans la première chaleur unité de libération;
la chaleur dans le au moins un circuit en boucle fermée dudit réseau de distribution de chaleur est de préférence distribuée par circulation d'au moins un fluide caloporteur, la température la plus basse du fluide de distribution de chaleur dans le système de refroidissement du moteur d'au moins un moteur à combustion interne (ICE) et la première unité de dégagement de chaleur est sensiblement supérieure à la température la plus basse du moyen de distribution de chaleur dans au moins un consommateur de chaleur (HC) du réseau de distribution de chaleur, **caractérisé en ce que**
au moins un fluide caloporteur dans au moins une conduite de retour dudit réseau de distribution de chaleur est réchauffé par le principe d'utilisation de la pompe à chaleur (HP) et dans lequel la température du caloporteur dans ledit système de refroidissement du moteur d'au moins un moteur à combustion interne (ICE) est sensiblement supérieur à 60°C, du moins lorsqu'une température de conception du réseau de distribution de chaleur est atteinte et que ledit moteur à combustion interne (ICE) et cette pompe à chaleur (HP) fonctionnent à pleine charge.

2. Procédé selon la revendication 1, **caractérisé en ce que**
le processus de combustion de carburant est un processus essentiellement continu, dans lequel ledit moteur à combustion interne (ICE) fonctionne dans la plage comprise entre sa puissance de fonctionnement nominale minimale et maximale, de préférence à une puissance nominale normale en fonctionnement continu;
le processus d'utilisation du cycle thermodynamique à changement de phase liquide-vapeur est essentiellement un processus continu, dans lequel ladite pompe à chaleur (HP) fonctionne dans la plage comprise entre sa puissance de fonctionnement nominale minimale et maximale, de préférence à une puissance nominale normale en fonctionnement continu;
le processus de récupération de chaleur perdue comprend un processus de condensation des gaz de combustion, dans lequel la chaleur collectée est utilisée pour l'utilisation du principe de la pompe à chaleur (HP) et dans laquelle la température du gaz réduit est abaissée à moins de 25°C, de sorte que le gaz réduit dans le système d'échappement est enlevé en ventilant le système d'échappement à l'aide d'un ventilateur incorporé (F1);
le processus de récupération de chaleur perdue est utilisé pour l'utilisation du principe de refroidissement, le processus de récupération de chaleur servant à refroidir l'air de charge pour l'utilisation du processus de combustion de carburant;
la température du fluide caloporteur dans le réseau caloporteur est déterminée, contrôlée et contrôlée par un groupe de moyens de régulation automatisés comprenant une vanne (V1 - V3), une pompe (PU1 - PU4) et des capteurs (T1 - T13), ladite régulation les moyens sont de préférence adaptés pour être manipulés par au moins une unité de contrôle.

3. Procédé selon la revendication 2, **caractérisé en ce que**
le processus de combustion de carburant est assuré par une pluralité d'unités de moteur à combustion interne (ICE), dans lesquelles la chaleur dans la première unité de libération de chaleur est transférée dans une connexion série et / ou en parallèle afin de transférer de la chaleur entre les systèmes de refroidissement du moteur afin de fournir une première unité de dégagement de chaleur;
le processus d'utilisation du cycle thermodynamique à changement de phase liquide-vapeur est fourni par une pluralité d'unités de pompes à chaleur (HP), la chaleur dans la seconde unité de libération de chaleur étant transférée en série et / ou en parallèle pour transférer la chaleur entre la pompe à chaleur (HP) des unités afin de fournir la deuxième unité de dégagement de chaleur;
le processus de distribution de chaleur dans le réseau de distribution de chaleur est assuré par une pluralité de moyens de distribution de chaleur, la chaleur dans ledit réseau de transfert de chaleur étant transférée de la première unité de dégagement de chaleur au consommateur de chaleur (HC) par circulation du moyen de transfert de chaleur primaire dans au moins un un circuit en boucle fermée, dans lequel la chaleur du récupérateur de chaleur perdue est transférée à la pompe à chaleur (HP) par circulation du caloporteur secondaire dans au moins un circuit en boucle fermée, et dans lequel la chaleur est valorisée par au moins une pompe à chaleur (HP) est en outre transféré vers un système de refroidissement de moteur d'au moins un moteur à combustion interne (ICE) par ledit moyen de transfert de chaleur primaire.

4. Procédé selon la revendication 3, **caractérisé en ce que**
la température du fluide caloporteur primaire dans le système de refroidissement du moteur dudit moteur à combustion interne (ICE) est maintenue à une valeur de consigne prédéterminée, l'adaptation du bilan d'énergie thermique étant réalisée en adaptant la puissance de ladite pompe à chaleur (HP) et / ou en adaptant la puissance dudit moteur à combustion interne (ICE) et / ou en adaptant le débit massique du caloporteur primaire à travers le système de refroidissement du moteur dudit moteur à combustion interne et / ou en adaptant le débit massique du caloporteur primaire à travers la pompe à chaleur (HP) et / ou en adaptant le débit massique du moyen de transfert de chaleur secondaire dans ledit circuit en boucle fermée pour une utilisation de la source de chaleur perdue.

5. Procédé selon la revendication 4, **caractérisé en ce que**
le débit massique du fluide caloporteur primaire dans ledit circuit de distribution de chaleur est adapté en modifiant la vitesse d'écoulement dans ledit circuit de distribution de chaleur et / ou le débit massique du fluide caloporteur secondaire dans ledit circuit à circuit fermé est adapté en modifiant le débit. dans ledit circuit à boucle fermée, dans lequel la vitesse du fluide caloporteur dans le réseau de distribution de chaleur est adaptée en commutant et / ou en réglant la puissance d'au moins une pompe de circulation.

6. Procédé selon la revendication 4, **caractérisé en ce que**
le débit massique du fluide caloporteur primaire dans ledit circuit de distribution de chaleur est adapté par une régulation du flux de courant, au moins une partie du milieu de transfert de fluide primaire dans la ligne de retour dudit circuit de distribution de chaleur est redirigée vers la ligne de retour dudit circuit. Connexion de dérivation (HP), et / ou dans lequel au moins une partie du flux de fluide caloporteur primaire provenant de ladite pompe à chaleur (HP) est redirigée vers la ligne avant du circuit de distribution de chaleur pour fournir une connexion de dérivation du système de refroidissement du moteur;
le débit massique du caloporteur secondaire dans ledit circuit en boucle fermée pour l'utilisation de la chaleur perdue est adapté par une régulation du débit du courant, au moins une partie du fluide caloporteur secondaire étant redirigée dans ledit circuit en boucle fermée pour fournir une connexion de dérivation pour au moins une unité de récupération de chaleur perdue.

7. Procédé selon les revendications 5 et 6, **caractérisé en ce que**
la régulation du débit massique du fluide caloporteur primaire et / ou la régulation du débit massique du caloporteur secondaire pour l'ajustement du bilan d'énergie thermique est déterminée, contrôlée et exécutée par ladite unité de commande, dans laquelle la position et / ou l'état de l'automatisé les moyens de régulation sont ajustés en fonction de la demande de chaleur dans ledit réseau de distribution de chaleur.

8. Ensemble d'appareils pour une source de chaleur perdue d'une installation de cogénération, comprenant:
dans lequel ledit système de refroidissement du moteur comprend en outre au moins une ouverture d'entrée et au moins une ouverture de sortie; ledit au moins un moteur à combustion interne (ICE) comprenant en outre un système de refroidissement du moteur, un système d'échappement, un système de refroidissement à l'huile de lubrification et un système de refroidissement à air de suralimentation;
dans lequel ladite pompe à chaleur (HP) comprend en outre un système de refroidissement d'huile de lubrification, une unité d'évaporateur et une unité de condenseur, et dans lequel ladite unité de condenseur comprend en outre une ouverture d'entrée et une ouverture de sortie ;
et au moins une unité de récupération de chaleur perdue, de préférence un échangeur de chaleur (HE2) adapté pour être associé à ladite unité d'évaporateur dans un circuit en boucle fermée;
dans lequel ladite unité de récupération de chaleur perdue est adaptée pour être associée à au moins une des sources du groupe chaleur perdue comprenant un système d'échappement, un système de refroidissement d'huile de lubrification et un système de refroidissement à air de chargement pour collecter la chaleur de ladite source de chaleur perdue; et
ladite unité d'évaporateur est adaptée pour être associée à ladite unité de récupération de chaleur perdue dans un circuit en boucle fermée pour transférer la chaleur collectée depuis ladite unité de récupération de chaleur perdue vers ladite unité d'évaporateur par un moyen de transfert de chaleur secondaire dans ledit circuit en boucle fermée; **caractérisé en ce que**
ladite sortie de l'unité de condenseur est adaptée pour être associée à ladite entrée du système de refroidissement du moteur pour transférer la chaleur de l'unité de condenseur au système de refroidissement du moteur par un moyen de transfert de chaleur primaire dans un circuit de distribution de chaleur; et
l'entrée de ladite unité de condenseur et ladite sortie du système de refroidissement du moteur sont adaptées pour être associées audit circuit de distribution de chaleur, ledit circuit de distribution de chaleur comprenant en outre au moins une unité réceptrice d'énergie thermique réceptrice, de préférence un consommateur de chaleur (HC).

9. Ensemble d'appareils pour l'utilisation de la chaleur perdue par l'installation de cogénération selon la revendication 8, **caractérisé en ce que**
dans lequel lesdites lignes directe et de retour interconnectent l'écoulement sortant dudit système de refroidissement du moteur et l'entrée de ladite unité de condenseur via au moins un consommateur de chaleur (HC), ledit circuit de conduction thermique comprenant au moins une ligne directe et au moins une ligne de retour, le fluide caloporteur primaire circule dans ledit circuit de distribution de chaleur pour transférer la chaleur de la source de chaleur au consommateur de chaleur (HC);
ladite sortie du système de refroidissement du moteur est couplée de manière opérationnelle à la ligne directe du circuit de distribution de chaleur;
ladite entrée de l'unité de condenseur est couplée de manière opérationnelle à au moins une ligne de retour du circuit de distribution de chaleur;
ladite sortie de l'unité de condenseur est couplée de manière opérationnelle à l'entrée dudit système de refroidissement de moteur, dans lequel ledit circuit de distribution de chaleur comprend un moyen de transfert de chaleur primaire; et
ledit échangeur de chaleur (HE2) est incorporé dans ledit système d'échappement pour recevoir au moins une partie de la chaleur du gaz de décharge, ledit échangeur de chaleur (HE2) étant couplé de manière opérationnelle à ladite unité d'évaporateur dans un circuit en boucle fermée comprenant un moyen de transfert de chaleur secondaire , dans lequel la chaleur collectée dans l'échangeur de chaleur (HE2) est transférée à l'unité d'évaporateur par une circulation de fluide caloporteur secondaire dans ledit circuit en boucle fermée, et en outre, la chaleur de ladite unité de condenseur est transférée au système de refroidissement du moteur par un fluide caloporteur primaire circulation dans ledit circuit de distribution de culasse, dans laquelle la température dudit fluide caloporteur primaire à l'entrée dudit système de refroidissement du moteur est sensiblement supérieure à 60°C lorsque le moteur à combustion interne (ICE) et la pompe à chaleur (HP) sont allumés et alimentés conditions de fonctionnement.

10. Ensemble d'appareil pour l'utilisation de la chaleur perdue par l'installation de cogénération selon la revendication 8, **caractérisé en ce que**
ladite boucle fermée comprend en outre un échangeur de chaleur supplémentaire (HE3), ledit échangeur de chaleur supplémentaire (HE3) étant apte à être associé à un système de refroidissement externe (CT1), ledit système de refroidissement externe (CT1) étant apte à être associé à une système de refroidissement d'huile de lubrification du moteur à combustion interne (ICE), système de refroidissement d'huile de lubrification de la pompe à chaleur (HP) et / ou du système de refroidissement à l'air de moteur à combustion interne (ICE).

11. Ensemble d'appareil pour l'utilisation de la chaleur perdue dans une installation de cogénération selon les revendications 9 et 10, **caractérisé en ce que**
ledit circuit de distribution de chaleur comprend une pluralité de consommateurs de chaleur (HC) en connexion parallèle et / ou en connexion série;
ledit circuit de distribution de chaleur comprend une pluralité de pompes à chaleur (HP) dans une connexion en parallèle et / ou dans une connexion en série, le circuit en boucle fermée dudit évaporateur comprenant une pluralité d'échangeurs de chaleur (HE2, HE3) dans une connexion en parallèle et / ou connexion en série, et dans lequel au moins une des ouvertures de sortie de l'unité de condenseur est couplée de manière opérationnelle à l'entrée dudit système de refroidissement du moteur à combustion interne (ICE).

12. Ensemble d'appareil pour l'utilisation de la chaleur perdue par l'installation de cogénération selon la revendication 11, **caractérisé en ce que**
ledit moteur à combustion interne (ICE) est conçu comme un moteur à gaz fonctionnant à un carburant choisi dans un groupe comprenant un gaz naturel, un gaz liquide, un gaz de décharge, un gaz de bois ou un biogaz, dans lequel ledit système de refroidissement du moteur est conçu comme un moteur système de refroidissement à chemise dudit moteur à combustion interne (ICE); le moyen de transfert de chaleur primaire dans le mode de réalisation préférentiel est de l'eau; le fluide caloporteur secondaire dans un mode de réalisation préférentiel est un mélange d'eau et de glycol; et au moins un échangeur de chaleur (HE2) est conçu comme un échangeur de chaleur à condensation (HE2), dans lequel le système d'échappement comprend en outre au moins un ventilateur (F1) d'extraction de gaz.
